# EUROPÄISCHE PATENTSCHRIFT

(11) **EP 1 293 632 B1**
(45) Veröffentlichungstag und Bekanntmachung des Hinweises auf die Patenterteilung: **17.03.2010**
(21) Anmeldenummer: 02019652.3
(22) Anmeldetag: 03.09.2002
(51) Int. Cl.: E05F 1/10, B60J 5/10, F16F 3/07

(54) **Federsystem für eine schwenkbare Klappe eines Kraftfahrzeugs**
Spring system for a pivoting rear door of a vehicle
Système de ressort pour le hayon pivotant d'un véhicule

(30) Priorität: 12.09.2001 DE 10144791
(43) Veröffentlichungstag der Anmeldung: 19.03.2003
(73) Patentinhaber: Bayerische Motoren Werke Aktiengesellschaft, 80809 München (DE)
(72) Erfinder: Moll, Patrick, 81375 München (DE); Koestler, Ulrich, 85241 Hebertshausen (DE)

(56) Entgegenhaltungen:
- EP-A- 0 872 610
- EP-A- 1 221 559
- DE-A1- 3 939 118
- US-A- 3 801 085

## Beschreibung

Die Erfindung betrifft ein Federsystem für eine schwenkbare Klappe, insbesondere eine Heckklappe eines Kraftfahrzeugs gemäß des Oberbegriffs des Patentanspruchs 1.

Ein aus der DE 196 46 939 A1 bekanntes Federsystem umfasst auf beiden Seiten der Klappe je eine Gasfeder. Gasfedern können als Gewichtsausgleichselemente dienen und gleichzeitig eine Dämpfungsfunktion haben. Ein großer Nachteil der Gasfedern, insbesondere wenn sie mit besonders hohen Drücken arbeiten, ist ihre starke Temperaturabhängigkeit. Bei niederen Temperaturen können sie häufig die Klappe nicht wirkungsvoll anheben bzw. das Anheben unterstützen. Bei hohen Temperaturen erfolgt das Anheben zu schnell. Zur Abschwächung dieser Temperaturabhängigkeit wird deshalb parallel zur Gasdruckfeder eine mechanische Feder zentrisch über der Gasdruckfeder angeordnet. Nachteiligerweise hat ein solches Federsystem einen relativ großen Außendurchmesser.

Die DE 3939118 offenbart eine Gasfeder mit zwei im Zylinder der Gasfeder angeordneten Federn. Die US 3801085 offenbart ein Federsystem, bei dem eine Feder über die Kolbenstange einer Gasfeder angeordnet ist.

Der Erfindung liegt die Aufgabe zugrunde, ein Federsystem für eine schwenkbare Klappe eines Kraftfahrzeugs zu schaffen, das einen vergleichsweise kleinen Außendurchmesser aufweist.

Diese Aufgabe wird durch die Merkmale des Patentanspruchs 1 gelöst.

Kerngedanke der Erfindung ist es, dass zwei Schraubenfedern ausschließlich einen aus dem Zylinder der Gasdruckfeder herausragenden Abschnitt einer Kolbenstange umgeben, und die Schraubenfedern sich direkt oder indirekt an der Stirnseite des Zylinders der Gasdruckfeder abstützen. Die Gasdruckfeder stellt dabei aufgrund ihrer flachen Federkennlinie gute Dämpfungseigenschaften sicher. Die Schraubenfedern verringern zum einen die Temperaturabhängigkeit des kompletten Federsystems und ermöglichen zum anderen eine den jeweiligen Erfordernissen angepasste steilere Federkennlinie des Federsystems als die Gasdruckfeder alleine. Die Anordnung der Schraubenfedern ausschließlich über der Kolbenstange ermöglicht einen kleinen Außendurchmesser des Federsystems bei relativ großen Längen. Der Außendurchmesser kann vorteilhafterweise kleiner gleich 22 mm sein.

Zwar ist aus der DE 36 00 845 A1 ein Federsystem bekannt, bei dem eine Schraubenfeder über einer Kolbenstange einer Gasdruckfeder angeordnet ist. Die Schraubenfeder stützt sich dabei einerseits auf einem Teller ab, der auf der Kolbenstange als Anschlag axial einstellbar angebracht ist, und andererseits am Ende einer Schmutzabdeckung, an dem auch ein Gelenkpunkt verbunden ist, mit dem das Federsystem karosserieseitig angelenkt ist. Im Unterschied hierzu stützen sich beim erfindungsgemäßen Federsystem die Schraubenfedern direkt oder indirekt an der Stirnseite des Zylinders der Gasdruckfeder ab. Dadurch ist kein einstellbarer Anschlag auf der Kolbenstange erforderlich und die axiale Führung im Federsystem erfolgt ausschließlich über die Gasdruckfeder. Auch die Funktion ist eine völlig andere: Während das Federsystem der DE 36 00 845 A1 kurze Federwege über die Schraubenfeder zur Schonung der Gasdruckfeder abfangen soll, dient das erfindungsgemäße Federsystem zur Kompensation der Temperaturabhängigkeit der Gasdruckfeder und zum Erzielen einer gewünschten Federkennlinie. Somit sind der DE 36 00 845 A1 keine Hinweise zu entnehmen, wie ein Federsystem aufgebaut sein muss, um bauraumoptimiert die Temperaturabhängigkeit einer Gasdruckfeder zumindest teilweise zu kompensieren und dennoch die Dämpfungseigenschaften der Gasdruckfeder in das Federsystem einzubringen.

Gasdruckfedern haben üblicherweise eine sehr geringe Federkonstante, sodass auch bei großen Federwegen die Federkraft noch gering ist. Zur optimalen Kompensation von Hebelkräften der Klappenmechanik sind aber meist höhere Federkräfte erforderlich. Die Federkraft des erfindungsgemäßen Federsystems wird dabei durch die Parallelschaltung der Schraubenfeder zur Gasdruckfeder erhöht. Da die gewünschten Federkräfte des Federsystems meist deutlich über den Federkräften der Gasdruckfeder liegen, weisen die Schraubenfedern vorteilhafterweise eine größere Federkonstante als die Gasdruckfeder auf.

Um auch bei sehr hohen gewünschten Federkräften des erfindungsgemäßen Federsystems noch den Vorteil des kleinen Außendurchmessers des Federsystems wahren zu können, befinden sich günstigerweise anstelle einer großen Schraubenfeder zwei ineinander angeordnete Schraubenfedern konzentrisch über der Kolbenstange.

Die beiden Schraubenfedern weisen unterschiedliche Längen in axialer Richtung der Kolbenstange auf. Dadurch können beispielsweise beim Komprimieren eines solchen Federsystems anfangs nur die Gasdruckfeder und die längere Schraubenfeder wirken. Nachdem das Federsystem teilweise komprimiert wurde, wirkt bei einer weiteren Kompression zusätzlich auch noch die kürzere Schraubenfeder. In der zumindest im wesentlichen linearen Federkennlinie des Federsystems entsteht auf diese Weise ein Knick. Bei einer Fahrzeugklappe kann dies beispielsweise dazu genutzt werden, dass die Klappe mit geringer Kraft fast vollständig geschlossen werden kann. Erst auf dem allerletzten Stück unmittelbar bevor die Klappe ins Schloss fällt, wirkt zusätzlich die kürzere Schraubenfeder, sodass zum endgültigen Schließen der Klappe etwas mehr Kraft erforderlich ist, beziehungsweise die Klappe nicht mit zuviel Schwung ins Schloss fällt. Dazu sind idealerweise beide Schraubenfedern Druckfedern.

Zumindest eine der Schraubenfedern weist auch bei vollständig ausgefahrener Kolbenstange noch eine Vorspannung auf. Aufgrund dieser Vorspannung kann auch in dieser Extremstellung des Federsystems die gewünschte Federkraft sichergestellt werden. Bei einer Fahrzeugklappe kann mit einem derartigen Federsystem beispielsweise sichergestellt werden, dass die Fahrzeugklappe sich im wesentlichen unabhängig von der Temperatur bis zur Endlage leicht Öffnen lässt, ohne zu prellen.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig.** 1: eine Ausführungsform eines erfindungsgemäßen Federsystems in einer eingefahrenen Posi- tion,
- **Fig.** 2: das Federsystem von **Fig.** 1 in einer ausgefahrenen Position und
- **Fig.** 3: die Federkennlinie des in **Fig.** 1 und **Fig.** 2 gezeigten Federsystems.

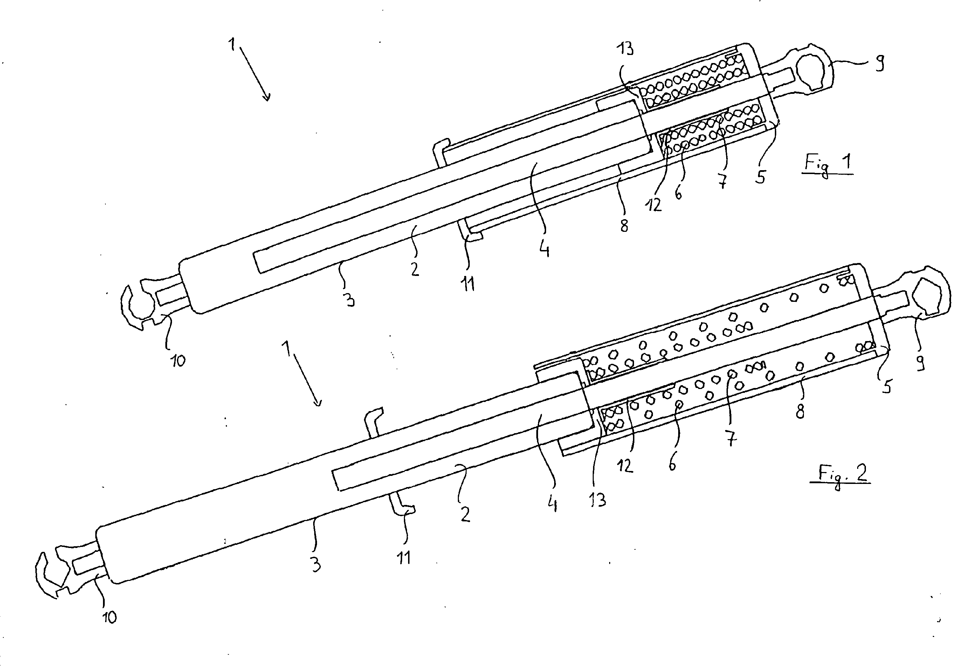

Das in **Fig.** 1 und **Fig.** 2 gezeigte Federsystem 1 enthält eine Gasdruckfeder 2, die einen beidseitig geschlossenen Zylinder 3 aufweist, aus der eine Kolbenstange 4 herausragt. Am freien Ende der Kolbenstange 4 ist radial ein Teller 5 befestigt. Zwischen diesem Teller 5 und dem geschlossenen Zylinder 3 befinden sich zwei ineinander angeordnete Schraubenfedern 6 und 7 konzentrisch über dem aus dem Zylinder 3 herausragenden Abschnitt der Kolbenstange 4. Die äußere Schraubenfeder 6 und die innere Schraubenfeder 7 sind dabei als Druckfedern konzipiert. Die beiden Schraubenfedern 6 und 7 sind von einem Schutzzylinder 8 umgeben, der sich teleskopartig über den Zylinder 3 der Gasdruckfeder 2 schieben kann. Außen auf dem Teller 5 und an der gegenüberliegenden Stirnseite des Zylinders 3 der Gasdruckfeder 2 ist jeweils eine Befestigungsöse 9 und 10 angebracht. Diese beiden Befestigungsösen 9 und 10 dienen zur Befestigung des Federsystems 1 an einer hier nicht dargestellten Fahrzeugklappe oder an einem ebenfalls nicht dargestellten Karosseriekörper. Auf dem Zylindermantel der Gasdruckfeder 2 ist eine Ringdichtung 11 radial angeordnet.

In der in **Fig.** 1 gezeigten vollständig komprimierten Stellung des Federsystems 1 ist die Kolbenstange 4 der Gasdruckfeder 2 größtenteils in den Zylinder 3 eingeschoben. Die beiden Schraubenfedern 6 und 7 zwischen dem Teller 5 und dem Zylinder 3 sind praktisch bis auf Block komprimiert. Der Schutzzylinder 8 ist relativ weit über den Zylinder 3 bis zur Ringdichtung 11 geschoben. Die Ringdichtung 11 dichtet den Zylinder 3 zum Schutzzylinder 8 ab, sodass in dieser Stellung kein Schmutz in den Bereich der Schraubenfedern 6 und 7 gelangen kann. Dabei ist die Ringdichtung 11 mit etwas Kraft auf dem Zylindermantel der Gasdruckfeder axial verschiebbar, sodass die Ringdichtung 11 automatisch optimal positioniert wird, wenn das Federelement 1 erstmalig in die eingefahrene Endlage bewegt wird.

**Fig.** 2 stellt das Federsystem 1 in der völlig ausgefahrenen Endlage dar. Wenn das Federsystem 1 von dieser Endlage aus zusammengepresst wird, schiebt sich die Kolbenstange 4 in den Zylinder 3. Dabei wird zunächst nur die Gasdruckfeder 2 und die äußere Schraubenfeder 7 zusammengedrückt. Die innere Schraubenfeder 7 weist eine kürzere Gesamtlänge als der mögliche Hub der Gasdruckfeder 2 auf, sodass erst nach einem bestimmten Federweg des Federsystems 1 auch die innere Schraubenfeder 6 zusammengedrückt wird. Dadurch steigt die zum Zusammenpressen des Federsystems 1 benötigte Federkraft ab einem bestimmten Federweg deutlich schneller an, als bis zu diesem Punkt.

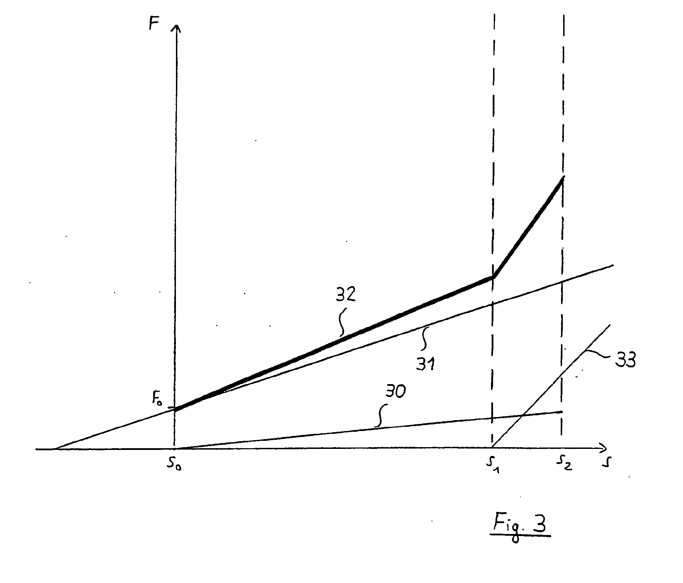

Die dazugehörigen Federkennlinien sind im Diagramm in **Fig.** 3 dargestellt. Darin ist vertikal die Federkraft F und horizontal der Federweg s aufgetragen. Der Federweg s des Federsystems 1 geht dabei von s₀ in der völlig ausgefahrenen Stellung wie in **Fig.** 2 dargestellt bis s₂ in der vollständig zusammengepressten Stellung wie in **Fig.** 1 dargestellt. Die Kennlinie der Gasdruckfeder ist mit 30 eingezeichnet. Die Federkennlinie der äußeren Schraubenfeder 6 ist mit 31 dargestellt. Aufgrund der Vorspannung erzeugt die Schraubenfeder 6 bereits bei s₀ eine Federkraft F₀. Die Kennlinie der inneren Schraubenfeder 7 ist mit 33 beziffert. Aufgrund der kürzeren Gesamtlänge der inneren Schraubenfeder 7 erzeugt diese erst ab dem Federweg s₁ eine Kraft. Die mit 32 bezeichnete bezeichnete Federkennlinie des erfindungsgemäßen Federsystems 1 besteht aus der Summe alle dieser Federkennlinien 30, 31 und 32.

Ein derartiges Federsystem 1 kann beispielsweise dazu verwendet werden, dass beim Schließen einer Fahrzeugklappe kurz bevor die Klappe in ein Schloss fällt, die vom Federsystem 1 erzeugte Kraft deutlich größer wird, sodass die Klappe stark abgebremst ins Schloss fällt.

Zur Verhinderung von unerwünschten Beschädigungen der Kolbenstange 4 durch die Relativbewegung der inneren Schraubenfeder 7 auf der Kolbenstange 4 ist wie in **Fig.** 1 und **Fig.** 2 dargestellt zwischen der inneren Schraubenfeder 7 und der Kolbenstange 4 eine Hülse 12 über zumindest einen Bereich der Kolbenstange 4 geschoben. Außerdem verhindert diese Hülse 12 ein Klappern der inneren Schraubenfeder 7 auf der Kolbenstange 4. Ebenfalls zur Vermeidung unerwünschter Geräuschbildung ist die innere Schraubenfeder 7 mit einem Ende fest mit der angrenzenden Stirnseite 13 des Zylinders 3 verbunden. Dadurch kann die innere Schraubenfeder 7 auch bei völlig ausgefahrener Kolbenstange 4 nicht axial auf der Kolbenstange hin- und herrutschen.

## Patentansprüche

1. Federsystem für eine schwenkbare Klappe, insbesondere eine Heckklappe eines Kraftfahrzeugs, mit wenigstens einer Gasdruckfeder (2), die im zusammengebauten Zustand mit Abstand von der horizontalen Schwenkachse der Klappe einerseits am Karosseriekörper, andererseits an der Klappe gelenkig angreift, wobei mindestens eine Schraubenfeder (6, 7) ausschließlich einen aus dem Zylinder (3) der Gasdruckfeder (2) herausragenden Abschnitt einer Kolbenstange (4) umgibt, und die Schraubenfeder (6, 7) sich direkt oder indirekt an der Stirnseite des Zylinders (3) der Gasdruckfeder (2) abstützt, **dadurch gekennzeichnet, dass** zwei ineinander angeordnete Schraubenfedern (6, 7) die aus dem Zylinder (3) der Gasdruckfeder (2) herausragende Kolbenstange (4) umgeben, wobei die beiden Schraubenfedern (6, 7) in axialer Richtung der Kolbenstange (4) unterschiedliche Längen aufweisen, und die kürzere Schraubenfeder (7) mit einem Ende direkt oder indirekt am Zylinder (3) der Gasdruckfeder (2) befestigt ist, wobei zumindest eine Schraubenfeder (6) auch bei vollständig ausgefahrener Kolbenstange (4) noch eine Vorspannung aufweist.

2. Federsystem nach Anspruch 1, **dadurch gekennzeichnet, dass** zumindest eine Schraubenfeder (6, 7) eine größere Federkonstante aufweist, als die Gasdruckfeder (2).

3. Federsystem nach Anspruch 1 oder 2, **dadurch gekennzeichnet, dass** zwischen der inneren Schraubenfeder (7) und der Kolbenstange (4) sich zumindest auf einem Teil der Länge eine Hülse (12) auf der Kolbenstange (4) befindet.

4. Federsystem nach einem der Ansprüche 1 bis 3, **dadurch gekennzeichnet, dass** beide Schraubenfedern (6, 7) Druckfedern sind.

5. Federsystem nach einem der vorhergehenden Ansprüche, **dadurch gekennzeichnet, dass** die Schraubenfedern (6, 7) von einem Schutzzylinder (8) umgeben sind.

6. Federsystem nach Anspruch 5, **dadurch gekennzeichnet, dass** der Schutzzylinder (8) sich teleskopartig über den Zylinder (3) der Gasdruckfeder (2) schieben kann.

7. Federsystem nach Anspruch 6, **dadurch gekennzeichnet, dass** auf dem Zylinder (3) der Gasdruckfeder (2) radial eine Dichtung (11) befestigt ist, die bei vollständig eingefahrener Kolbenstange (4) den Schutzzylinder (8) zum Zylinder (3) der Gasdruckfeder (2) abdichtet.

8. Federsystem nach einem der vorhergehenden Ansprüche, **dadurch gekennzeichnet, dass** das Federsystem (1) einen Gesamtdurchmesser kleiner gleich 22 mm hat.

## Claims

1. A spring system for a pivotable door, especially a tailgate of a motor vehicle, with at least one gas pressure spring (2), which, when assembled, engages in an articulated manner, on the one hand, on the car body, and on the other hand, on the door, at a spacing from the horizontal pivot axis of the door, wherein at least one helical spring (6, 7) exclusively surrounds a portion of a piston rod (4) projecting from the cylinder (3) of the gas pressure spring (2), and the helical spring (6, 7) is supported directly or indirectly on the end face of the cylinder (3) of the gas pressure spring (2), **characterised in that** two helical springs (6, 7) arranged inside one another surround the piston rod (4) projecting from the cylinder (3) of the gas pressure spring (2), wherein the two helical springs (6, 7) have different lengths in the axial direction of the piston rod (4), and the shorter helical spring (7) being fastened directly or indirectly by one end to the cylinder (3) of the gas pressure spring (2), where at least one helical spring (6) still has a biasing even when the piston rod (4) is fully extended.

2. A spring system according to claim 1, **characterised in that** at least one helical spring (6, 7) has a greater spring constant than the gas pressure spring (2).

3. A spring system according to claim 1 or 2, **characterised in that** a sleeve (12) is located on the piston rod (4) between the inner helical spring (7) and the piston rod (4) at least over a part of the length.

4. A spring system according to any one of claims 1 to 3, **characterised in that** the two helical springs (6, 7) are pressure springs.

5. A spring system according to any one of the preceding claims, **characterised in that** the helical springs (6, 7) are surrounded by a protective cylinder (8).

6. A spring system according to claim 5, **characterised in that** the protective cylinder (8) can slide in the manner of a telescope over the cylinder (3) of the gas pressure spring (2).

7. A spring system according to claim 6, **characterised in that** a seal (11) is radially fastened on the cylinder (3) of the gas pressure spring (2) and, when the piston rod (4) is fully retracted, seals the protective cylinder (8) with respect to the cylinder (3) of the gas pressure spring (2).

8. A spring system according to any one of the preceding claims, **characterised in that** the spring system (1) has a total diameter of smaller than or equal to 22 mm.

## Revendications

1. Système de ressorts de volet pivotant, notamment de coffre de véhicule automobile comprenant :
- au moins un ressort à gaz (2) qui, à l'état assemblé, agit à distance de l'axe de pivotement horizontal du volet d'une part, sur le corps de la carrosserie et d'autre part, sur le volet,
- au moins un ressort hélicoïdal (6, 7) entourant exclusivement le segment d'une tige de piston (4) sortant du cylindre (3) du ressort à gaz (2), et le ressort hélicoïdal (6, 7) s'appuie directement ou indirectement contre la face frontale du cylindre (3) du ressort à gaz (2),
**caractérisé par**
- deux ressorts hélicoïdaux (6, 7) l'un dans l'autre, entourant la tige de piston (4) sortant du cylindre (3) du ressort à gaz (2),
- les deux ressorts hélicoïdaux (6, 7) ayant des longueurs différentes dans la direction axiale de la tige de piston (4), et
- le ressort hélicoïdal (7) le plus court est fixé par une extrémité directement ou indirectement au cylindre (3) du ressort à gaz (2),
- au moins un ressort hélicoïdal (6) est en précontrainte même lorsque la tige de piston (4) est complètement déployée.

2. Système de ressorts selon la revendication 1,
**caractérisé en ce qu'**
au moins le ressort hélicoïdal (6, 7) a une constante de ressort plus grande que le ressort à gaz (2).

3. Système de ressorts selon la revendication 1 ou 2,
**caractérisé en ce qu'**
au moins une partie de la longueur de la tige de piston (4) comporte un manchon (12), entre le ressort hélicoïdal intérieur (7) et la tige de piston (4).

4. Système de ressorts selon les revendications 1 à 3,
**caractérisé en ce que**
les deux ressorts hélicoïdaux (6, 7) sont des ressorts de compression.

5. Système de ressorts selon les revendications précédentes,
**caractérisé en ce que**
les ressorts hélicoïdaux (6, 7) sont entourés par un cylindre protecteur (8).

6. Système de ressorts selon la revendication 5,
**caractérisé en ce que**
le cylindre protecteur (8) coulisse télescopiquement sur le cylindre (3) du ressort à gaz (2).

7. Système de ressorts selon la revendication 6,
**caractérisé en ce qu'**
un joint (11) est fixé radialement sur le cylindre (3) du ressort à gaz (2), et lorsque la tige de piston (4) est complètement rétractée, le joint assure l'étanchéité entre le cylindre de protection (8) et le cylindre (3) du ressort à gaz (2).

8. Système de ressorts selon les revendications précédentes,
**caractérisé en ce que**
le système de ressorts (1) a un diamètre total inférieur à 22 mm.
